# FASCICULE DE BREVET EUROPEEN

(11) **EP 2 475 258 B1**
(45) Date de publication et mention de la délivrance du brevet: **06.04.2016**
(21) Numéro de dépôt: 10763801.7
(22) Date de dépôt: 02.09.2010
(51) Int. Cl.: A23B 4/06, A23L 3/36, F25D 3/10

(54) **PROCEDE ET INSTALLATION DE REFROIDISSEMENT DU CONTENU D'UNE ENCEINTE METTANT EN OEUVRE UN SYSTEME DE CONVECTION FORCEE DANS LA PARTIE HAUTE DE L'ENCEINTE**
VERFAHREN UND VORRICHTUNG ZUR KÜHLUNG DES INHALTS EINER KAMMER MIT EINEM SYSTEM FÜR VERSTÄRKTE KONVEKTION IM OBEREN TEIL DER KAMMER
METHOD AND EQUIPMENT FOR COOLING THE CONTENTS OF A CHAMBER IMPLEMENTING A FORCED-CONVECTION SYSTEM IN THE TOP PORTION OF THE CHAMBER

(30) Priorité: 10.09.2009 FR 0956185
(43) Date de publication de la demande: 18.07.2012
(73) Titulaire: L'Air Liquide Société Anonyme pour l'Etude et l'Exploitation des Procédés Georges Claude, 75007 Paris (FR)
(72) Inventeur: COUSIN, Franck, F-44250 Saint Brevin Les Pins (FR); FREDERICK, Willy, F-17270 Clerac (FR); PERROT-MINOT, Maryline, F-42410 Verlieu (FR); KOWALEWSKI, Pierre, F-75016 Paris (FR); ALGOET, Jo, B-8953 Wijtschate - Heuvelland (BE); CHAPON, Alexandra, F-75019 Paris (FR)
(74) Mandataire: Mellul-Bendelac, Sylvie Lisette
(86) Numéro de dépôt international: PCT/FR2010/051829
(87) Numéro de publication internationale: WO 2011/030047

(56) Documents cités:
- EP-A1- 1 152 203
- FR-A1- 2 532 821
- FR-A1- 2 566 515
- FR-A1- 2 764 366
- GB-A- 1 430 385
- US-A- 3 368 363
- US-A- 3 575 010
- US-A- 4 187 325
- US-A- 4 476 686
- US-A- 4 754 610
- US-A- 5 520 005

## Description

La présente invention concerne le domaine des procédés de refroidissement du contenu d'une enceinte à l'aide d'un liquide cryogénique. Elle concerne, en particulier, le refroidissement de produits alimentaires dans des appareils du type mélangeurs, malaxeurs, broyeurs ou encore pétrins, le contenu de l'appareil pouvant être alors solide ou pâteux comme c'est le cas de la viande, ou encore liquide.

Dans de telles applications d'utilisation des liquides cryogéniques pour le refroidissement de produits alimentaires dans des malaxeurs broyeurs, l'utilisation de CO₂ est privilégiée, pour sa capacité à transférer beaucoup de frigories au changement d'état.

En considérant l'exemple des mélangeurs de viande, on sait qu'il existe une littérature très abondante concernant l'utilisation de CO₂ liquide, tout particulièrement en injection dans la partie basse du malaxeur, afin d'améliorer les conditions d'échange thermique entre le liquide cryogénique et la viande. On se reportera, par exemple, aux documents U.S.-4,476,686 et EP-744,578, ainsi que les documents US3575010, US3368363, EP1152203 et GB1430385.

L'application au domaine de la viande est en effet tout à fait massive et emblématique (les produits concernés sont très variés, steak haché (boeuf, veau), viande égrainée, haché de porc (saucisses..), haché de volailles (cordon bleu, nuggets etc....), d'un domaine où le contrôle de la température dans le malaxeur doit être très efficace :
- il est nécessaire de compenser l'échauffement mécanique lié au mélange et au hachage ;
- il est souhaitable d'obtenir une texture compatible pour le formage ultérieur.

Mais il faut noter que pour plusieurs raisons, la demande de ce secteur industriel pour le contrôle de température de malaxeurs broyeurs s'oriente vers l'utilisation d'azote liquide. Or on sait que pour l'azote liquide, la valorisation des frigories au changement d'état est deux fois moins importante que pour le CO₂.

On résume alors dans ce qui suit les principales caractéristiques des procédés d'injection haute ou basse, en CO₂ ou en azote, dans de tels malaxeurs.

### L'injection haute CO₂ :

- on valorise la seule phase solide du CO₂ mais le rendement frigorifique est intéressant à 64 kcal/kg à 20 bar ;
- la technique nécessite un niveau de chargement optimum et demande d'adapter le nombre de tromblons (injecteurs) de façon à déposer la neige carbonique sur la totalité de la surface des viandes sans créer d'amas de neige, mais il faut reconnaître que la mise en oeuvre en injection haute est aisée ;
- elle se caractérise par une grande facilité de mélange des phases solide viande/solide neige, la neige carbonique est générée au coeur du produit ;
- la technique présente toujours le risque d'extraire de la neige carbonique, il est donc préférable de privilégier le mode d'extraction par débordement ;
- cette technique est traditionnellement limitée aux petits mélangeurs et petits volumes de production (typiquement inférieurs à 100 tonnes par an) ;
- le CO₂ présente par ailleurs un effet bactériostatique, il empêche les micro-organismes de se multiplier.

### L'injection haute azote :

- on l'a signalé plus haut, cette technique est limitée par un rendement frigorifique faible, voisin de 36 kcal/kg à 1,5 bar ;
- elle se caractérise également par le fait qu'elle présente des risques de points froids et donc par une répartition difficile ;
- l'injection haute azote nécessite donc de contrôler et de maîtriser une pression basse d'injection ;
- pour l'ensemble de ces raisons, il faut noter que l'injection haute azote est très peu utilisée.

L'injection basse CO₂ et azote : elle permet de valoriser la chaleur latente du changement d'état des fluides cryogéniques ainsi qu'une partie de la chaleur spécifique des gaz. Cette valorisation des gaz dépend du temps de contact avec le produit.

Si en injection haute l'azote liquide présentait un handicap de rendement frigorifique très important par rapport au CO₂, en injection basse, le rendement frigorifique de l'azote se rapproche de celui du CO₂ (le temps de contact entre le gaz et le produit permet de valoriser les gaz). L'azote présente par ailleurs l'avantage d'offrir une solubilité dans les matières grasses et l'eau bien plus faible que le CO₂.

La consommation de fluide constatée est environ 20% plus importante en injection basse azote par rapport à l'injection basse CO₂.

Dans l'ensemble de ce contexte, on conçoit, et c'est un des objectifs de la présente invention, qu'il serait avantageux de pouvoir disposer d'un nouveau procédé de refroidissement de produits dans de tels malaxeurs, en injection basse du fluide, permettant une meilleure valorisation des gaz et notamment de valoriser la partie des gaz qui ne l'est pas actuellement dans les procédés existants.

Comme on le verra plus en détails dans ce qui suit, le procédé selon l'invention, de refroidissement d'une masse de produit alimentaire contenue dans une enceinte (de type mélangeur, malaxeur, broyeur... ), à l'aide d'un liquide cryogénique injecté au sein de la masse de matière, dans la partie basse de l'enceinte, est remarquable en ce que l'on dispose de plus, dans la partie haute du malaxeur, d'un système de convection forcée, en utilisant par exemple des ventilateurs ou encore une turbine, permettant ainsi d'utiliser (en quelque sorte de recycler, au sein même de l'enceinte, avant que ces gaz n'en soient sortis) le pouvoir frigorifique des gaz froids résultant de l'injection basse du liquide cryogénique.

Les expérimentations et simulations effectuées par la Demanderesse laissent penser que le procédé de l'invention permet de valoriser environ 5kcal/kg de CO₂ supplémentaires et environ 25kcal/L d'azote supplémentaires, par rapport aux procédés actuels d'injection basse. Ce qui correspond à une diminution d'environ 30% de la consommation pour l'azote et de 7% pour le CO₂.

En d'autres termes, si la littérature des enceintes de refroidissement cryogénique (tunnels, mélangeurs, broyeurs...etc.... ) comporte de très nombreuses références mettant en oeuvre des évents d'extraction vers l'extérieur, extraction naturelle ou forcée, des gaz formés dans l'enceinte du fait de la vaporisation du cryogène, la présente invention ne se situe pas du tout dans cette approche (parfaitement insuffisante pour les objectifs présentement visés) : la présente invention s'attache à la création d'une convection forcée dans la partie haute de l'enceinte, donc d'une circulation des gaz résultant de la vaporisation du cryogène, circulation au sein de cette enceinte, par exemple via la présence de ventilateurs ou d'une ou plusieurs turbine, dans la partie haute de l'enceinte i.e selon le cas (structure de l'enceinte, mode de son chargement en produit etc...) fixés sous le couvercle du malaxeur, ou encore fixés sous la paroi constituant le « toit » de l'enceinte considérée.

La présente invention concerne alors un procédé de refroidissement d'une masse de produit alimentaire contenue dans une enceinte du type mélangeur, malaxeur, broyeur ou encore pétrin, à l'aide d'un liquide cryogénique injecté au sein de la masse de produit, dans la partie basse de l'enceinte, se caractérisant en ce que l'on dispose de plus, dans la partie haute de l'enceinte, d'un système de convection forcée, système de convection forcée par exemple constitué d'un ventilateur ou d'un ensemble de ventilateurs, ou encore d'une turbine, permettant ainsi d'utiliser le pouvoir frigorifique des gaz froids résultant de l'injection basse du liquide cryogénique.

A titre illustratif, on pourra utiliser des ensembles de ventilateurs couramment utilisés dans des tunnels de refroidissement et surgélation cryogénique, par exemple des ventilateurs de type 0,38 KW équipés de 5 pales inclinées à 45°.

Comme on l'a déjà signalé, si de tels ventilateurs étaient couramment utilisés dans des tunnels, en aucune façon ils n'étaient envisagés pour participer au transfert cryogénique à une masse de produit alimentaire dans des malaxeurs à injection basse du cryogène.

On préférera selon l'invention des ventilateurs à fort rendement qui génèrent des vitesses de vents importantes.

On signalera d'ailleurs que dans cette application l'énergie développée par ces ventilateurs reste négligeable, les gaz étant destinés à être évacués rapidement, l'objectif étant de les valoriser le plus rapidement possible.

D'autres caractéristiques et avantages de la présente invention apparaîtront plus clairement dans la description suivante, donnée à titre illustratif mais nullement limitatif, faite en relation avec les dessins annexés pour lesquels :

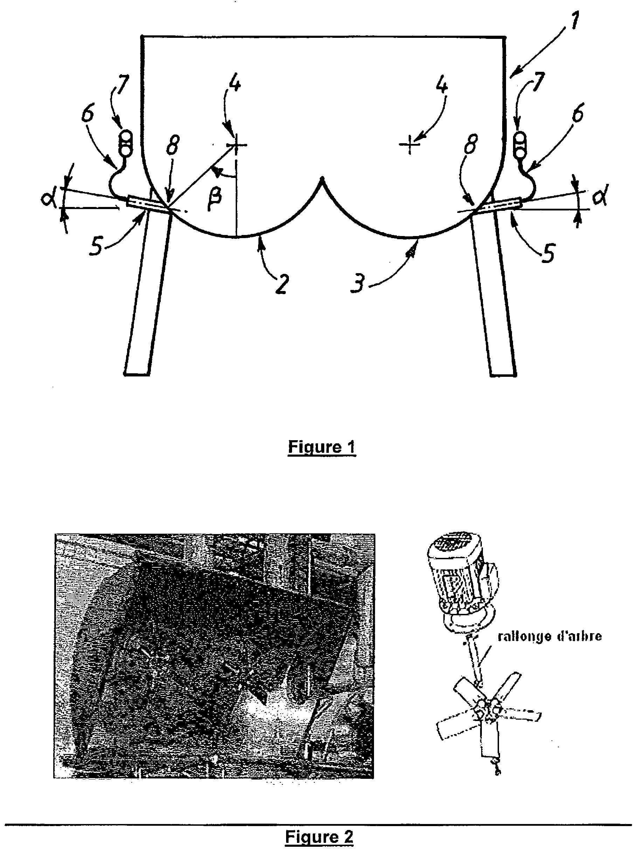

- la figure 1 est une représentation schématique d'un mélangeur classique de l'art antérieur (par exemple de viande) à deux auges, mettant en oeuvre, de chaque coté du mélangeur, une série de buses d'injection d'azote liquide dans la partie basse du mélangeur;
- la figure 2 fournit une vue partielle de la partie haute d'une enceinte (couvercle) présentant un exemple de mise en oeuvre de l'invention, la partie haute étant ici munie d'un système de convection forcée constitué par deux ventilateurs de 5 pâles inclinées à 45° (fixés sur la face inférieure -intérieure- du couvercle de fermeture du malaxeur).

On reconnaît sur la figure 1 la partie inférieure d'un mélangeur classique de l'art antérieur (par exemple un mélangeur de viande) à deux auges 2 et 3, pour lequel on met en oeuvre une série de buses d'injection de fluide cryogénique, par exemple d'azote liquide, de chaque côté de l'appareil.

On a symbolisé par la référence 5 sur la figure, les buses d'injection du liquide cryogénique, se raccordant à la paroi du mélangeur, buses elles-mêmes alimentées au travers de flexibles 6 par une rampe de distribution et d'alimentation 7, avantageusement positionnée comme c'est le cas sur cette figure 1 en position haute par rapport aux buses d'injection.

Afin de ne pas charger inutilement la figure, on a représenté, au niveau de la référence 4, par de simples croix, les axes des arbres des rotors du mélangeur, un axe par auge du mélangeur comme représenté sur la figure 1.

Comme on pourra le constater à la lecture de cette figure 1, la position des buses d'injection le long de la paroi de chaque auge (angle bêta), ainsi que l'inclinaison de chaque buse d'injection par rapport à l'horizontale (angle alpha), adoptent ici des valeurs avantageuses, en vue d'une part, d'éviter que la trajectoire du jet de liquide cryogénique ne croise les arbres et rotors du mélangeur (éviter les risques de création de points froids), ceci tout en intéressant une portion maximum de la masse de produit à refroidir contenue dans le mélangeur, mais également d'autre part d'éviter, par l'inclinaison de la buse d'injection par rapport à l'horizontale, que lors du nettoyage ultérieur du mélangeur à l'eau, cette eau ne puisse remonter dans la ligne d'alimentation en liquide cryogénique.

On a ainsi pu considérer qu'un angle bêta voisin de 45° par rapport à la verticale donne de bons résultats, et qu'un angle alpha d'au moins 10° par rapport à l'horizontale est un réglage qu'il est avantageux d'adopter.

Comme signalé ci-dessus, la figure 2 fournit une vue partielle de la partie haute d'une enceinte de malaxage (on visualise tout particulièrement le couvercle de fermeture de l'enceinte) présentant un exemple de mise en oeuvre de l'invention, la partie haute étant ici munie d'un système de convection forcée constitué par deux ventilateurs de 5 pâles inclinées à 45°, les ventilateurs sont ici fixés sur la face inférieure -intérieure- du couvercle de fermeture du malaxeur.

Ce système de convection a été utilisé pour la réalisation d'un exemple pratique de mise en oeuvre de l'invention, qui va maintenant être décrit, et qui permet de mieux appréhender les avantages comparatifs de l'invention, comparatifs par rapport à une situation où le système de convention n'est pas mis en oeuvre.

On détaille dans ce qui suit les conditions d'un exemple pratique réalisé en injection basse azote et CO₂ :
- utilisation d'un malaxeur de marque HOBART, à une seule auge ;
- système d'injection basse : utilisation de deux injecteurs mis en quinconce de part et d'autre de l'auge, et deux électrovannes pilotées en même temps ;
- source de fluide cryogénique utilisée :
   ▪ utilisation d'un réservoir de CO₂ liquide stocké à 20 bar et -20°C ;
   ▪ utilisation d'une réserve d'azote liquide à une pression de 3.6 bar.
- le produit traité était un minerai de viande bovine fraîche à 20 % de matière grasse (pont de congélation -1°C, teneur en eau 62%, chaleur spécifique au dessus du point de congélation 0.85 kcal/kg, chaleur spécifique au dessous du point de congélation 0.36 kcal/kg, chaleur latente 55 kcal/kg) ;
- la température de référence après broyage est comprise entre -1°C et -1.5°C.
- le temps moyen d'un cycle de malaxage est habituellement sur ce site industriel de 12 minutes, en injection basse CO₂.
- protocole suivi :
   ▪ Prise de température du minerai frais incorporé dans le malaxeur.
   ▪ Injection du fluide cryogénique avec et sans la convection forcée (50 Hertz) en se basant sur une température de consigne de -1°C du minerai avant broyage dans le malaxeur.
   ▪ En parallèle :
      o L'intensité du malaxeur est relevée grâce à une prise ampérométrique.
      o Les températures à l'intérieur du malaxeur, à l'extérieur du malaxeur (au niveau de l'ouverture / fermeture du couvercle) et la température des gaz d'extraction sont enregistrées.
   ▪ Prise de température du minerai après broyage.
   ▪ Vérification de l'aspect visuel et de la texture du minerai broyé ainsi que du steak formé en aval, vérifications complétées par une analyse bactériologique du produit formé.
   ▪ Les essais sont réalisés sur des lots de 150 kg de viande :
      - ESSAI 1 : avec injection de CO₂ sans convection forcée.
      - ESSAIS 2 : avec injection de CO₂ avec convection forcée.
      - ESSAIS 3 : avec injection de LN₂ sans convection forcée.
      - ESSAIS 4 : avec injection de LN₂, avec convection forcée.

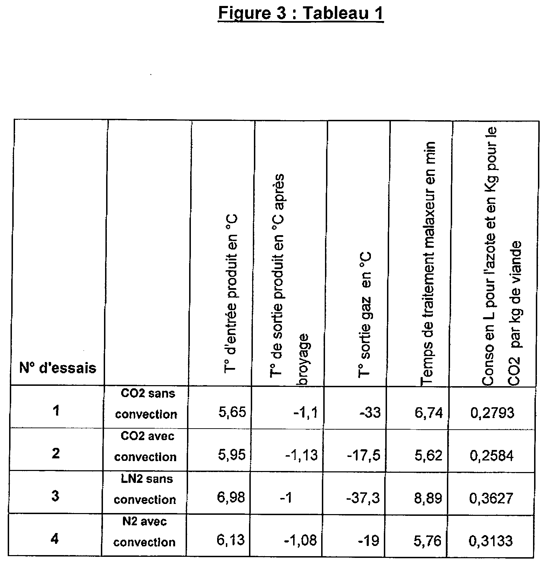

Les résultats des essais sont rassemblés dans le tableau présenté en figure 3 ci-après (chaque résultat correspond à la moyenne obtenue pour 4 essais réalisés dans ces mêmes conditions), et dont on peut tirer les conclusions suivantes :
- On observe clairement lors de la mise en oeuvre de la convection selon l'invention (essais 2 et 4) une réduction du temps de traitement (de l'ordre de 1 minute pour le CO₂ et 3 minutes pour l'azote), donc du débit mis en oeuvre puisque l'injecteur passe toujours le même débit à une pression et à taux de diphasique identiques.
- On observe une réduction de la consommation de CO₂ liquide de l'ordre de 8% grâce à la présence de la convection forcée, et une réduction de la consommation d'azote liquide de l'ordre de 14% grâce à la présence de la convection forcée.
- On note également la différence de température de sortie des gaz (prise dans la partie haute du malaxeur) dans le cas de la présence de la convection : la température de gaz est plus élevée en présence de la convection, ce qui démontre bien que le pouvoir frigorifique des gaz a été davantage utilisé, que l'on a donc davantage valorisé le pouvoir frigorifique des fluides.

Ces bons résultats montrent donc sans ambiguïté le fait que cette convection forcée introduite dans la partie haute de l'enceinte a un effet incontestable et positif sur le transfert de frigories global réalisé sur la masse traitée.

Ceci pourrait paraître paradoxal compte tenu de la masse compacte traitée, ou encore compte tenu du temps disponible durant le traitement, temps qui pourrait apparaître faible.

On peut tenter d'apporter l'explication suivante : à titre comparatif, dans un tunnel cryogénique traditionnel on installe un ventilateur de 0,20kW/ m² pour atteindre une convection de 80W/m/K. Selon la présente invention, et c'est tout son mérite, on peut installer typiquement 7,5 kW sur un seul m², pour disposer d'une convection que l'on peut estimer à environ 200W/m²/K, ce qui est considérable.

On peut considérer que les conditions de l'invention approchent les convections du type « impaction » (on dit aussi « impingement » dans ce milieu).

Ainsi en résumé, les résultats d'essais comparatifs ici fournis montrent la différence de température de sortie des gaz (sonde placée dans la partie haute du malaxeur ou dans un conduit d'extraction) avec et sans présence de la convection (donc ventilateurs mis en marche ou non durant le temps de cycle du malaxeur) et ainsi montrent sans ambigüité que la température de gaz évacués est plus élevée en présence de la convection, ce qui signifie que le pouvoir frigorifique des gaz a été davantage utilisé, que l'on a donc davantage valorisé le pouvoir frigorifique du liquide cryogénique initial.

## Revendications

1. Procédé de refroidissement d'une masse de produit alimentaire contenue dans une enceinte du type mélangeur, malaxeur, broyeur ou encore pétrin, à l'aide d'un liquide cryogénique injecté au sein de la masse de produit, dans la partie basse de l'enceinte, **se caractérisant en ce que** l'on dispose de plus, dans la partie haute de l'enceinte, d'un système de convection forcée, système de convection forcée par exemple constitué d'un ventilateur ou d'un ensemble de ventilateurs, ou encore d'une turbine, permettant ainsi d'utiliser le pouvoir frigorifique des gaz froids résultant de l'injection basse du liquide cryogénique.

2. Installation de refroidissement d'une masse de produit alimentaire contenue dans une enceinte du type mélangeur, malaxeur, broyeur ou encore pétrin, à l'aide d'un liquide cryogénique injecté au sein de la masse de produit, dans la partie basse de l'enceinte, **se caractérisant en ce que** l'enceinte est munie en sa partie haute d'un système de convection forcée, système de convection forcée par exemple constitué d'un ventilateur ou d'un ensemble de ventilateurs, ou encore d'une turbine, apte à permettre l'utilisation du pouvoir frigorifique des gaz froids résultant de l'injection basse du liquide cryogénique.

3. Installation selon la revendication 2, **caractérisée en ce que** le système de convection forcée est constitué par un ou plusieurs ventilateurs à pâles.

4. Installation selon la revendication 3, **caractérisée en ce que** le système de convection forcée est constitué par des ventilateurs dont les pâles sont inclinées à 45°.

5. Installation selon la revendication 3 ou 4, **caractérisée en ce que** le système de convection forcée est constitué par deux ventilateurs de 5 pâles inclinées à 45°.

6. Installation selon la revendication 2, **caractérisée en ce que** le système de convection forcée est constitué par une turbine.

## Patentansprüche

1. Verfahren zum Kühlen einer Lebensmittelprodukt-Masse, die in einem Gehäuse in der Art eines Mischers, Rührwerks, Mahlwerks oder aber Knetmaschine enthalten ist, mithilfe einer kryogenen Flüssigkeit, die im unteren Abschnitt des Gehäuses in die Produktmasse injiziert wird, **dadurch gekennzeichnet, dass** man darüber hinaus im oberen Abschnitt des Gehäuses über ein Zwangskonvektionssystem verfügt, wobei das Zwangskonvektionssystem beispielsweise aus einem Lüfter oder einer Reihe von Lüftern, oder aber einer Turbine gebildet wird, anhand derer man die Kühlkapazität der kalten Gase nutzen kann, die sich aus der unten erfolgten Injektion der kryogenen Flüssigkeit ergibt.

2. Anlage zum Kühlen einer Lebensmittelprodukt-Masse, die in einem Gehäuse in der Art eines Mischers, Rührwerks, Mahlwerks oder aber Knetmaschine enthalten ist, mithilfe einer kryogenen Flüssigkeit, die im unteren Abschnitt des Gehäuses in die Produktmasse injiziert wird, **dadurch gekennzeichnet, dass** das Gehäuse in seinem oberen Abschnitt mit einem Zwangskonvektionssystem ausgestattet ist, das beispielsweise aus einem Lüfter oder einer Reihe von Lüftern, oder aber einer Turbine gebildet wird, das imstande ist, die Nutzung der Kühlkapazität der kalten Gase zu ermöglichen, die sich aus der unten erfolgten Injektion der kryogenen Flüssigkeit ergibt.

3. Anlage nach Anspruch 2, **dadurch gekennzeichnet, dass** das Zwangskonvektionssystem aus einem oder mehreren Flügellüftern besteht.

4. Anlage nach Anspruch 3, **dadurch gekennzeichnet, dass** das Zwangskonvektionssystem aus Lüftern besteht, deren Flügel um 45° geneigt sind.

5. Anlage nach Anspruch 3 oder 4, **dadurch gekennzeichnet, dass** das Zwangskonvektionssystem aus zwei Lüftern zu je fünf Flügeln besteht, die um 45° geneigt sind.

6. Anlage nach Anspruch 2, **dadurch gekennzeichnet, dass** das Zwangskonvektionssystem aus einer Turbine besteht.

## Claims

1. Method for cooling a mass of a food product contained in a chamber of the mixer, blending, crusher or kneading type, using a cryogenic liquid injected into the mass of product, in the bottom portion of the chamber, **characterised in that** there is also, arranged in the top portion of the chamber, a forced-convection system, forced-convection system for example constituted of a fan or of a set of fans, or a turbine, thus making it possible to use the cooling power of the cold gases resulting from the bottom injection of the cryogenic liquid.

2. Equipment for cooling a mass of a food product contained in a chamber of the mixer, blending, crusher or kneading type, using a cryogenic liquid injected into the mass of product, in the bottom portion of the chamber, **characterised in that** the chamber is provided in its upper portion with a forced-convection system, forced-convection system for example constituted of a fan or of a set of fans, or a turbine, able to allow for the using of the cooling power of the gold gases resulting from the bottom injection of the cryogenic liquid.

3. Equipment according to claim 2, **characterised in that** the forced-convection system is constituted of one or several fans with blades.

4. Equipment according to claim 3, **characterised in that** the forced-convection system is constituted by fans of which the blades are inclined 45°.

5. Equipment according to claim 3 or 4, **characterised in that** the forced-convection system is constituted by two fans of 5 blades inclined 45°.

6. Equipment according to claim 2, **characterised in that** the forced-convection system is constituted by a turbine.
